# EUROPÄISCHE PATENTANMELDUNG

(11) **EP 0 949 526 A2**
(43) Veröffentlichungstag der Anmeldung: **13.10.1999**
(21) Anmeldenummer: 99105412.3
(22) Anmeldetag: 17.03.1999
(51) Int. Cl.: G02B 21/34, B01L 7/00

(54) **Temperaturgeregelte Überströmapparatur für biologische Proben**

(30) Priorität: 08.04.1998 DE 19815696
(71) Anmelder: GSF-Forschungszentrum für Umwelt und Gesundheit GmbH, 85764 Neuherberg (DE)
(72) Erfinder: Stampfl, Andreas, 85354 Freising (DE)

(57) **Zusammenfassung**

Die Erfindung betrifft eine temperaturgeregelte Überströmapparatur für biologische Proben, bestehend aus aus einem Probenträger und mindestens einem Zu- und einem Ablauf für temperierte Überströmmedien aus Vorratsbehältern.

Aufgabe der Erfindung ist es, die Überströmapparatur so auszugestalten, daß der Temperaturgradient auf dem Probenträger minimiert wird.

Diese Aufgabe wird dadurch gelöst, daß der Zulauf eine schräg auf den Probenträger gerichtete kanülenähnliche Röhre zur Erzeugung einer gerichteten Strömung im Bereich der Probe ist, wobei ein Bereich der kanülenähnlichen Röhre mit einem Thermostaten versehen ist.

## Beschreibung

Die Erfindung betrifft eine temperaturgeregelte Überströmapparatur für biologische Proben nach dem Oberbegriff des Patentanspruchs 1.

Untersuchungen zu Wirkungsmechanismen in Zellen (z. B. intrazelluläre Ionenbestimmungen) werden häufig in Meßkammern, die auf einem inversen Mikroskop montiert sind, durchgeführt. Dabei sind die Zellen von einem flüssigen Medium umgeben. Die Experimente müssen bei konstanter Temperatur erfolgen. Dazu wird üblicherweise die Meßkammer temperiert. Dabei tritt jedoch ein Temperaturgradient vom Rand zur Mitte hin auf, da die Beheizung nur am Rand der Meßkammer erfolgen kann. Dadurch liegen am Meßort, d. h. an den zu untersuchenden Zellen, je nach Position immer verschiedene Temperaturen vor. Zusätzlich wird ein Teil der Wärme über das Ölimersionsobjektiv des Mikroskops durch den Boden der Meßkammer abgeleitet. Messungen bei konstanter, definierter Temperatur sind daher nicht möglich.

Ein möglicher Lösungsansatz ist der Zulauf eines temperierten Mediums vom Rand der Meßkammer mit Absaugung. Die oben genannten Nachteile werden dadurch nur etwas gemindert, aber nicht beseitigt.

Aufgabe der Erfindung ist es, eine temperaturgeregelte Überströmapparatur der gattungsgemäßen Art so auszugestalten, daß der Temperaturgradient auf dem Probenträger minimiert wird.

Diese Aufgabe wird durch die Merkmale des Patentanspruchs 1 gelöst.

Die Unteransprüche beschreiben vorteilhafte Ausgestaltungen der Überströmapparatur.

Ein besondere Vorteil der Apparatur besteht darin, daß nach Justage (Positionierung des Zulaufs am Rand des Sichtfeldes des Mikroskops) während des Experiments Zellen an verschiedenen Position auf dem Probenträger bei konstanter Temperatur vermessen werden können.

Zum Beispiel ist dies bei Untersuchungen des Einflusses von Medikamenten auf die Konzentrationen des freien intrazellulären Kalziums in Nervenzellen notwendig, da diese stark temperaturabhängig ist.

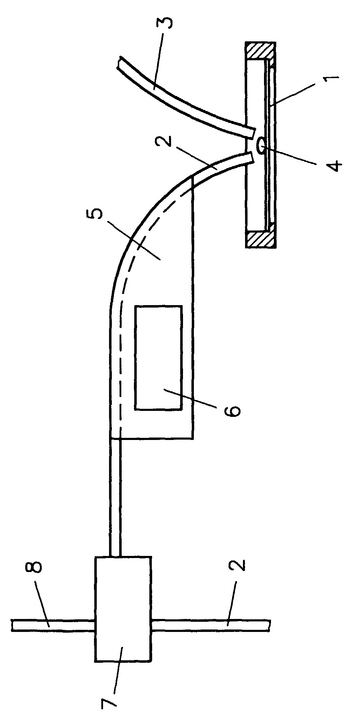

Die Erfindung wird im folgenden anhand eines Ausführungsbeispiels mit Hilfe der Figur näher erläutert.

Dabei zeigt die Figur die schematische Darstellung der temperaturgeregelten Überströmapparatur.

Die Figur zeigt rechts den Probenträger 1, der sich in einer nicht dargestellten temperierten Kammer befindet, wobei der Kammerrand thermostatisierbar ist. Zur Durchführung der Untersuchungen befindet sich die Messkammer unter dem Objektiv eines ebenfalls nicht dargestellten Mikroskops. Der Probenträger ist üblicherweise Glas, Quarz oder eine Petrischale und hat je nach Material eine geringe Wärmeleitfähigkeit. Links von einer biologischen Probe 4 befindet sich der Zulauf 2, der schräg auf den Probenträger gerichtet ist und in der Nähe der Probe positioniert wird. Dabei liegt der Winkel zwischen der Achse des Zulaufs 2 und dem Probenträger 1 zwischen 50 und 85°, vorzugsweise zwischen 70 und 85°. Vorzugsweise ist der Zulauf eine Kanüle, deren Auslauf abgeschrägt sein kann. Diese Abschrägung des Zulaufs 2 ist besonders gut zur Erzeugung eines gerichteten Mediumstroms geeignet. Die Ableitung 3 ist etwas höher als die Zuleitung 2 positioniert und sollte einen etwas größeren Durchmesser aufweisen. Dabei kann die Ableitung 3 in ihrer Richtung spiegelsymznetrisch zum Zulauf 2 angeordnet sein. Die Eintrittsöffnung der Ableitung 3 ist vorzugsweise so gestaltet, daß ihr Rand eine waagerechte Ebene definiert. Dies ist in der Figur nicht dargestellt. Wegen der höheren Positionierung der Eintrittsöffnung der Ableitung 3 wird das Überströmmedium durch die Ableitung abgesaugt.

Der Zulauf 2 wird durch einen Thermostaten 5 geführt und dabei das Überströmmedium temperiert. Dieser Thermostat ist durch einen Metallblock, Peltierelemente 6 und Thermofühler (hier nicht dargestellt) realisiert. Statt der Peltierelementen können auch andere Heiz/Kühlelemente verwendet werden. Es ist vorteilhaft, die Kanüle in einer Nut des Metallblocks zu führen, was einen einfachen, schnellen Wechsel der Kanüle ermöglicht. Links ist ein Dreiwegehahn 7 dargestellt. Dieser ermöglicht es, die Versuchslösung (Überströmmedium) entweder in die Meßkammer oder über eine Rückführleitung 8 in das Vorratsbehälter (hier nicht dargestellt) zu leiten, wo diese wieder mit Sauerstoff gesättigt werden kann. Somit ist sichergestellt, daß die Zellen immer mit frischer Versuchslösung überspült werden.

Für manche Versuche ist es auch notwendig, die biologischen Proben mit verschiedenen Lösungen zu überspülen. Für einen raschen Wechsel der Lösungen empfiehlt es sich, mehrere unabhängige Zuläufe, jeweils mit Dreiwegehahn 7 versehen, über den Thermostaten zu führen. Ist ein rascher Wechsel nicht nötig, können mehrere Zuleitungen 2 mit Hilfe von Dreiwegehähnen 7 auf einen einzigen thermostatisierten Zulauf 2 gelegt werden.

## Patentansprüche

1. Temperaturgeregelte Überströmapparatur für biologische Proben bestehend aus aus einem Probenträger und mindestens einem Zu- und einem Ablauf für temperierte Überströmmedien aus Vorratsbehältern, dadurch gekennzeichnet, daß der Zulauf (2) eine schräg auf den waagrecht angeordneten Probenträger (1) gerichtete kanülenähnliche Röhre zur Erzeugung einer gerichteten Strömung von Lösungen im Bereich der Probe (4) ist, wobei ein Bereich der kanülenähnlichen Röhre mit einem Thermostaten (5) versehen ist, und der Ablauf (3) einen größeren Durchmesser aufweist und höher positioniert ist als der Zulauf (2).

2. Temperaturgeregelte Überströmapparatur nach Anspruch 1, dadurch gekennzeichnet, daß der Thermostat (5) ein die kanülähnliche Röhre umschließender Metallblock mit Thermofühler und Heiz/ Kühlelementen (6) ist, wobei die kanülähnliche Röhre in einer Nut des Metallblocks geführt wird.

3. Temperaturgeregelte Überströmapparatur nach Anspruch 1 oder 2, gekennzeichnet durch ein Dreiwegeventil (7) im Zulauf (2) zum Wechsel zwischen Überströmen der Probe und Rückführung des Mediums in ein Vorratsbehälter über eine Rückführleitung (8).

4. Temperaturgeregelte Überströmapparatur nach einem der Ansprüche 1 bis 3, dadurch gekennzeichnet, daß die Heiz/Kühlelemente (6) Peltierelemente sind.
